# EUROPEAN PATENT APPLICATION

(11) **EP 2 933 526 A2**
(43) Date of publication of application: **21.10.2015**
(21) Application number: 14200262.5
(22) Date of filing: 23.12.2014
(51) Int. Cl.: F16F 15/067, F16F 1/22, F16F 1/26

(54) **Semi-active node particularly for vibration damping**

(30) Priority: 01.04.2014 PL 40776314
(71) Applicant: Instytut Podstawowych Problemów Techniki Polskiej Akademii Nauk, 02-106 Warszawa (PL); Adaptronica Spolka z Ograniczona Odpowiedzialnoscia, 05-092 Lomianki (PL)
(72) Inventor: Mroz, Arkadiusz, 32-600 Oswiecim (PL); Holnicki-Szulc, Jan, 02-502 Warszawa (PL); Biczyk, Jan, 00-714 Warszawa (PL)
(74) Representative: Belz, Anna

(57) **Abstract**

The present invention is a semi-active node comprising two structural layers of the structural element and a controllable coupling, which can, in particular, be used in damping of vibrations caused by the impact load.

The essence of the invention is that on the beam (**1**), consisting of two slidingly adjacent layers **(2)** and **(3),** a coupling **(5)** is installed in such a way that the beam **(1)** is between the plate **(7)** of the coupling **(5)** and the movable lock **(6),** while between the lock **(6)** and the plate **(8),** the coupling **(5)** is equipped with pressing means **(9),** furthermore between the plate **(7)** of the coupling **(5)** and the lock **(6),** there is an actuator **(10),** whereas the coupling **(5)** is located preferably in the place of the highest relative shift of those layers **(2)** and **(3)** of the beam **(1).**

## Description

The present invention is semi-active node particularly for vibration damping, comprising two supporting layers of structural elements and controllable coupling. The techniques of induced vibrations damping might be divided into passive, active and semi-active. Passive damping of vibrations refers mainly to the use of materials with strong damping features (e.g. rubbers, elastomers). More effective active damping requires the use of actuators, , generating a force counteracting the object movement according to adopted control strategy. It is connected with power consumption and with the risk of undesirable excitation of unstable vibrations. Semi-active techniques are becoming an increasingly attractive option, allowing for effective and cheap (in terms of energy consumption) solution.

Published patent specification DE19702518 describes a method and apparatus for bidirectional active influence on joints in mechanical structures using dissipation of energy phenomenon, due to a change of compression force on one or more joints caused by physical factors, such as for example piezo-actuators or by using magnetostrictive effect. This solution is characterized in that the transition from the neutral state into an active state of joint in the structure (powering of piezo-actuators or, alternatively, activation of magnetostrictive effect) corresponds to the transition from less stiff to more stiff connection.

Also, there is a known friction absorber from patent specification CN1542306, consisting of friction plate with arc-shaped cutouts, said plate being interposed between two frames made of four arms higned at the corners. In arc-shaped cutouts there are bolt shafts, which are embedded in frame arms and nut tightened. Between the nuts and arms, on bolt shafts, there are piezo-elements, which increase the pressure of arms to the friction plate. The given solution is characterized in that the transition from neutral state to active state of frictional absorber (powering of piezo-actuator) increases the pressure of arms implied on the friction plate.

According to the invention, on the layered beam, consisting of two adjacent layers joined slidingly to each other, a controllable coupling is installed in such a way that the beam is between the fixed plate of the coupling, and the moving lock, where the coupling is located preferably in the place of the highest relative shift of those layers of the beam. Between that plate of the coupling and the lock, there is an actuator connected to the control device. Piezoelements or electromagnet comprise the actuator. Between the lock and the second - parallel to the first one - plate of the coupling there are means pressing the lock to the beam, preferably a set of springs. According to other variant, the permanent magnets are the pressing means.

Two-layered beam is equipped with clamps, which provide adjacency of its co-vibrating layers. Alternatively, the layers of the beam are slidingly connected by longitudinal grooves.

Semi-active node presented in the invention allows for immediate joining and disjoining of two structural layers of the beam, thus causing a qualitative change of structural scheme, i.e. the change of the way the layered beam works, from the joint work of both layers to independent work of each layer and vice versa. Strain energy accumulated in the structure is used to counteract the movement during vibrations of the structure. Numerical analyses and experimental tests show high efficiency of this strategy for vibration damping process. It is significant from the reliability standpoint, that activation of the coupling implies reduction of the stiffness of the node, providing thereby its initial stiffness while working in the idle state (without activation of the coupling).

The invention is exemplified on a schematic drawing, where:
fig. 1 shows a graphic illustration of a fragment of two layered beam with a coupling;
fig. 2 shows a node in the idle state;
fig. 3 shows a node in a state of deflection of the beam clenched by the coupling;
fig. 4 shows a node in a state of deflection without temporary pressure on beam layers ;
fig. 5 shows a node in a state of maximum deflection and clenched coupling;
fig. 6 shows a schematic drawing of the beam fixed at one side;
fig. 7 shows a schematic drawing of the beam supported at both ends;
fig. 8 shows a node with permanent magnet;
fig. 9 shows a cross-section of the bar with grooves.

As shown on the drawing, the beam **1** is composed of two adjacent layers **2** and **3,** which are connected slidingly using clamps **4.** On the beam **1,** in the place of the highest relative shift of layers, a coupling **5** is installed, which has movable lock **6** situated between the fixed plates **7** and 8. One of the plates **7** and the lock **6** clamps both layers **2** and **3** of the beam **1.** Between the lock **6** and the second plate **8** of the coupling **5,** there are spiral springs **9,** which press the lock **6** to the beam **1.** Between the lock **6** and the plate **7,** there is an actuator **10** in a form of stack of piezoelectric elements.

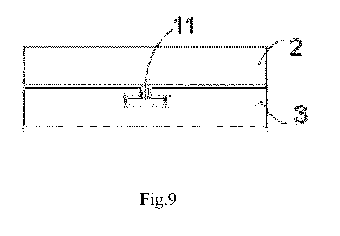

Alternatively, as shown in figure 9, in order to ensure adjacency of layers **2** and **3** of the beam 1, the layers **2** and **3** are connected slidingly through longitudinal grooves **11.**

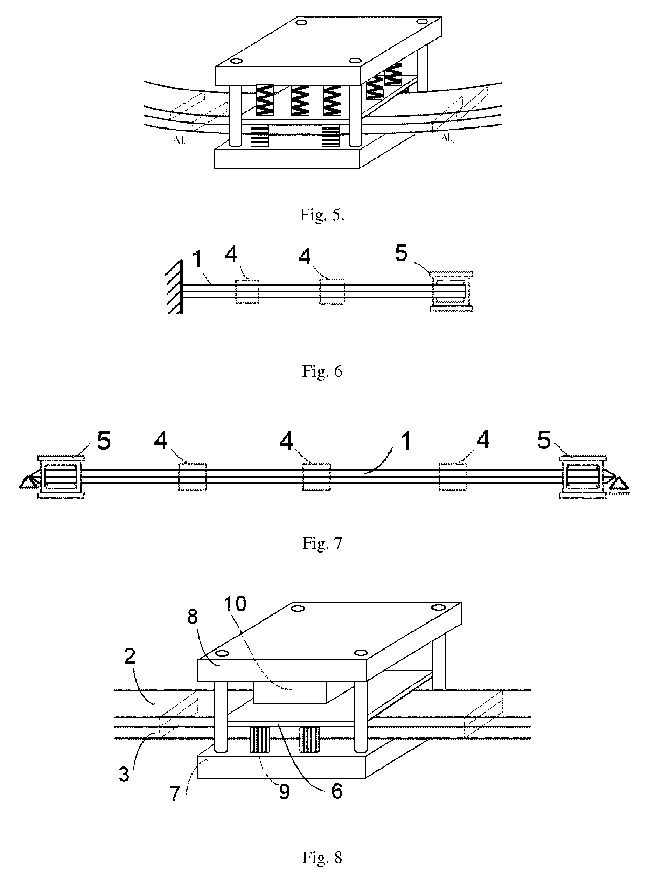

In figure 8, a coupling **5** is shown, where the pressing means **9** are the permanent magnets located between the lock **6** and the plate **8** of the coupling **5.**

Alternatively the actuator **10** is an electromagnet connected to a controller, not visible on the drawing.

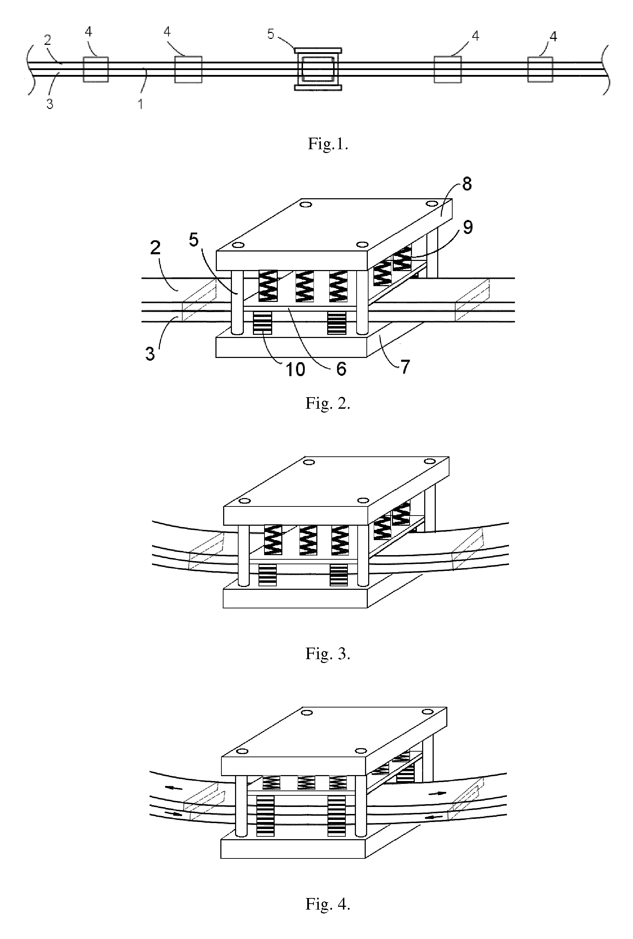

The purpose of the coupling **5** is local, fast-controllable joining/disjoining of the layers **2** and **3** of the beam. The control strategy of joining/disjoining of the coupling **5** is shown on figures 2 - 5 where the coupling **5** is installed on the beam **1.** At the time corresponding to the highest relative shift of layers **2** and **3** in the node in figure 3, the control system turns on the actuator **10,** which causes withdrawal of the lock **6** from the beam **1** (figure 4) and mutual movement of the layers **2** and **3** relative to each other. Instant deactivation of the actuator **10** causes closing of the coupling **5** - as shown on figure 5 - maintaining dislocation, which inhibits (damps) further movement of the beam **1** until the next turning point, where the controlling process is repeated.

The coupling **5** clamps fragments of the layers **2** and **3** of the beam **1,** using frictional layer pressed by the pressing means **9** for carrying contact stresses in the turned on position (coupled state) of the coupling **5.** Actuator **10** is used for quick lifting of the lock **6** to cause dislocation due to reduction of pressure of the layers **2** and **3** caused by pressing means **9** when the coupling **5** is in turned off position (decoupled state).

## Claims

1. Semi-active node, particularly for vibration damping, **characterized in that** on a beam **(1),** consisting of two layers **(2)** and **(3)** adjacent slidingly, a coupling **(5)** is installed, in such a way that the beam **(1)** is between a fixed plate **(7)** of the coupling **(5)** and movable lock - **(6),** while between the lock **(6)** and the plate **(8),** the coupling **(5)** is equipped with pressing means **(9),** and furthermore between the plate **(7)** of the coupling **(5)** and lock **(6)** there is an actuator **(10),** where the coupling **(5)** is located preferably in the place of the highest relative shift of those layers **(2)** and **(3)** of this beam **(1)**, while the activator **(10)** is connected to a controller.

2. Semi-active node, particularly for vibration damping, as in claim 1, **characterized in that** two-layered beam **(1)** is equipped with clamps **(4),** which provides adjacency of its layers **(2)** and **(3).**

3. Semi-active node, particularly for vibration damping, as in claim 1, **characterized in that** the layers **(2)** and **(3)** of the beam **(1)** are connected by means of longitudinal grooves **(11).**

4. Semi-active node, particularly for vibration damping, **characterized in that** the actuator **(10)** is made of piezo-electric elements.

5. Semi-active node, particularly for vibration damping, **characterized in that** an electromagnet is the actuator **(10).**

6. Semi-active node, particularly for vibration damping, as in claim 1, **characterized in that** springs are the pressing means **(9) .**

7. Semi-active node, particularly for vibration damping, as in claim 1, **characterized in that** permanent magnets are the pressing means **(9).**
